# EUROPÄISCHE PATENTSCHRIFT

(11) **EP 3 507 127 B1**
(45) Veröffentlichungstag und Bekanntmachung des Hinweises auf die Patenterteilung: **02.06.2021**
(21) Anmeldenummer: 17749124.8
(22) Anmeldetag: 11.07.2017
(51) Int. Cl.: B60L 5/36, B60L 5/40

(54) **SCHLEIFLEITUNG, STROMABNEHMER, SCHLEIFLEITUNGSSYSTEM UND VERFAHREN ZUR BERÜHRUNGSLOSEN DATENÜBERTRAGUNG**
CONDUCTOR LINE, CURRENT COLLECTOR, CONDUCTOR LINE SYSTEM, AND METHOD FOR CONTACTLESSLY TRANSMITTING DATA
LIGNE À CONTACT GLISSANT, COLLECTEUR DE COURANT, SYSTÈME DE LIGNE À CONTACT GLISSANT ET PROCÉDÉ DE TRANSMISSION DE DONNÉES SANS CONTACT

(30) Priorität: 01.09.2016 DE 102016116396
(43) Veröffentlichungstag der Anmeldung: 10.07.2019
(73) Patentinhaber: Conductix-Wampfler GmbH, 79576 Weil am Rhein (DE)
(72) Erfinder: ECKLE, Michael, 79379 Müllheim (DE)
(74) Vertreter: Charrier Rapp & Liebau
(86) Internationale Anmeldenummer: PCT/EP2017/067320
(87) Internationale Veröffentlichungsnummer: WO 2018/041453

(56) Entgegenhaltungen:
- WO-A1-03/022619
- DE-A1- 10 001 873
- DE-A1-102006 028 288
- US-A1- 2013 167 751

## Beschreibung

Die Erfindung betrifft eine Schleifleitung nach dem Oberbegriff des Anspruchs 1, einen Stromabnehmer nach dem Oberbegriff des Anspruchs 6, ein Schleifleitungssystem nach dem Oberbegriff des Anspruchs 11 sowie ein Verfahren zur berührungslosen Datenübertragung nach dem Oberbegriff des Anspruchs 14.

Bei bekannten Schleifleitungssystemen fährt ein verfahrbarer elektrischer Verbraucher, entlang einer Schleifleitung. Zur Versorgung des Verbrauchers mit elektrischer Energie ist dieser mit einem Stromabnehmer ausgestattet, dessen Schleifkontakte in längs der Schleifleitung geführte Leiterstränge eingreifen. Der Verbraucher kann z.B. ein Transportgehänge einer Schienenhängebahn, ein auf Schienen verfahrbarer Leitungswagen oder auch sog. E-RTG-Containerkräne sein, welche mit einem elektrischen Fahrantrieb ausgerüstet sind, der von der Schleifleitung mit elektrischer Energie versorgt wird.

Um Daten von und zum Verbraucher übertragen zu können, z. B. Steuerdaten, werden bei bekannten Schleifleitungssystemen u. a. parallel zu den Leitersträngen der Schleifleitung geführte Schlitzhohlleiter verwendet, in die am Verbraucher angeordnete Antennen eingreifen. Ein solches Schleifleitungssystem offenbart die DE 10 2014 107 466 A1.

Dabei beeinflussen die in den leistungsübertragenden Leitersträngen auftretenden elektrischen Vorgänge unter Umständen nachteilig die HF-Übertragung im Schlitzhohlleiter. Heben beispielsweise die Schleifkontakte der Stromabnehmer von den Schleifkontakt Flächen der Schleifleitung kurzzeitig ab, so kann es zu kurzfristigen Unterbrechungen der direkten Stromleitung kommen und es entstehen Funkenstrecken, welche kurzzeitig hochfrequente Anteile enthaltende Pulse erzeugen können. Da dort der Schlitzhohlleiter und der Erdungsleiterstrang eine gemeinsame Baueinheit bilden, kann die Datenübertragung beim Ableiten von Strömen über den Erdungsleiterstrang ebenfalls die Datenübertragung nachteilig beeinflussen.

Ein weiteres Problem bei derartigen Schleifleitungssystemen mit Schlitzhohlleiter für die Datenübertragung ist, dass diese oft in Bereichen mit schmutziger und feuchter Umgebung eingesetzt werden, beispielsweise in Umschlagplätzen für Container in Häfen.

Die US 2013/0167751 A1 offenbart ein Sortiersystem von verfahrbaren Behälter mit einer Schleifleitung nach dem Oberbegriff des Anspruchs 1.

Die WO 03/022619 A1 offenbart eine Stromversorgungsschiene in Form eines Profils, wobei in Längsrichtung elektrisch Stromschienen angeordnet sind, die mit Stromabnehmerkontakten zusammenwirken, die von dem Stromabnehmerwagen getragen werden, der von der Schiene geführt wird Dabei ist der Stromabnehmerwagen mit einem beweglichen Element verbunden, um elektrisch angetrieben zu werden. Innerhalb der Schiene ist eine kontinuierliche Positions-und/oder Verschiebungserfassungsbahn vorgesehen, die mit einem Detektor zusammenwirkt, der von dem Teil des Stromabnehmerwagens getragen wird, der in der Schiene untergebracht ist. Weiter ist der Detektor ist mit einer Signalverarbeitungseinrichtung verbunden, um damit die momentane Position und/oder die Verschiebung des zugehörigen beweglichen Elements zu steuern.

Die DE 10 2006 028 288 A1 betrifft ein Verfahren und eine Vorrichtung zum Austausch von Daten zwischen einem ersten Schienenfahrzeug einerseits und einem zweiten Schienenfahrzeug oder einer nichtbeweglichen Station andererseits. Es ist vorgesehen, dass die Daten mittels optischem Richtfunk (Free Space Optics) übertragen werden. Dazu sind Sender vorhanden, die mit Dateneingabeeinheiten verbunden sind, und Empfänger, die mit Datenauswerteeinheiten verbunden sind.

Die DE 100 01 873 A1 offenbart eine optischen Sende- und Empfangsvorrichtung (optischer Transceiver) mit einem in einem einzigen Bauelement mit vorzugsweise zwei optischen Anschlüssen integrierten optischen Sender und optischen Empfänger. Zu diesem Zweck sind der optische Sender und der optische Empfänger auf einem gemeinsamen Träger montiert und in einem gemeinsamen Gehäuse untergebracht, wobei vorzugsweise der optische Sender in einer Kammer des Gehäuses und der optische Empfänger in einer anderen Kammer des Gehäuses angeordnet wird, um ein elektrisches und optisches Übersprechen zwischen Sender und Empfänger zu vermeiden.

Die DE 10 2011 119 351 A1 offenbart eine Schleifleitung, bei der seitlich an einem Doppel-T-Träger mit ihren Öffnungen seitlich nach außen weisenden stromführenden Leiterstränge angeordnet sind. Weiter ist dort ebenfalls ein Schlitzhohlleiter angeordnet, dessen Längsschlitz seitlich nach außen weist, so dass Schmutz und insbesondere Regenwasser relativ leicht von der Seite in den Längsschlitz eindringen kann und sich insbesondere auf der unteren, waagrechten Schlitzfläche ablagert.

Bei dem in der DE 10 2012 002 085 A1 offenbarten Schlitzhohlleiter weist der Längsschlitz ebenfalls zur Seite. Um vor allem das Eindringen Regenwasser von schräg oben in den Längsschlitz zu vermeiden, ist dort jedoch an der oberen Wandung des Längsschlitzes ein zweimal um 45° abgewinkeltes Umlenkteil vorgesehen, so dass die Öffnung des Längsschlitzes nach dem Umlenkteil senkrecht nach unten gerichtet ist. Die Antenne des Schienenfahrzeugs greift dabei senkrecht von unten in den Längsschlitz ein, so dass die elektromagnetischen Wellen aus dem T-förmigen Hohlraumprofil des Schlitzhohlleiters mittels des Umlenkteils nach unten zum Längsschlitz abgelenkt werden müssen. Dies ist aufgrund der Unsymmetrie des abgewinkelten Längsschlitzes sowie des längeren Übertragungswegs der Wellen im Gegensatz zu einem geraden Längsschlitz nachteilig für die Datenübertragung.

Bei dem Schleifleitungssystem der DE 10 2004 008 571 A1 mit als Doppel-T-Träger ausgebildeter Tragschiene mit seitlich daran angeordneten Leitersträngen wird das Eindringen von Regenwasser dadurch vermieden, dass der Schlitzhohlleiter im Fußteil des Doppel-T-Trägers angeordnet ist und der Längsschlitz des Schlitzhohlleiters senkrecht nach unten mündet. An der Antenne anhaftender Schmutz und von unten aufgewirbelter Schmutz, wie es besonders im Bereich der E-RTG-Containerkräne der Fall ist, dringt dort jedoch weiter ungehindert durch den Längsschlitz in den Schlitzhohlleiter. Da solche E-RTG-Containerkräne bevorzugt in Häfen mit feuchter, salzhaltiger Luft eingesetzt werden, dringt dort auch die aufsteigende Feuchtigkeit ungehindert in den Schlitzhohlleiter ein und führt dort zur schnellen Korrosion sowohl des Schlitzhohlleiters als auch der in den Schlitzhohlleiter einführbaren verfahrbaren Antenne.

Die EP 1 724 952 A1 betrifft ein Kommunikationssystem, das eine Hochgeschwindigkeits-Hochqualitätskommunikation in einem länglichen Kommunikationsbereich bereitstellt und eine leckoptische Faser implementiert. Dabei ist die optische Faser vom GI-Typ mit einem Kern, der so strukturiert ist, dass der Brechungsindex in der Mitte groß ist, allmählich abnimmt, wenn er sich der Peripherie nähert, und darin gemischte Streuer aufweisen kann. Wenn moduliertes Licht von einem Sender in die optische Faser eintritt, verläuft das modulierte Licht durch die optische Faser, während ein Teil des Lichts von dessen Seite austritt. Ein Empfänger empfängt dieses Lecklicht und demoduliert es, um Daten zu erhalten.

Die DE 10 2004 020 324 A1 offenbart ein optisches Verfahren und eine optische Einrichtung zur Überwachung eines elektrischen Leiters, wobei ein optischer Sensor an oder in einer Komponente des Leiters angeordnet ist und ein in den optischen Sensor eingespeistes Lichtsignal aufgrund einer physikalischen Größe am Ort des optischen Sensors verändert wird. Aus der verformungsbedingten Veränderung des Lichtsignals wird ein Messwert für die physikalische Größe ermittelt.

Die EP 2 056 492 A1 offenbart ein mobiles optisches Kommunikationssystem umfassend eine Bahn und einen Zug. Mehrere leckoptische Fasern, eine Vielzahl von optischen Fasern und eine Vielzahl von Lichtempfängern sind entlang der Eisenbahn angeordnet. Die undichte optische Faser enthält lichtdurchlässige Teile. Die lichtundurchlässigen Teile sind diskontinuierlich entlang der Längsrichtung angeordnet und in Intervallen angeordnet, die kleiner oder gleich einer Länge des Zuges in Bezug auf eine Fahrtrichtung des Zuges sind. Mehrere Lichtempfänger, die auf dem Zug angeordnet sind, sind entlang der gesamten Länge des Zuges in Fahrtrichtung in Intervallen kleiner oder gleich einer festen Länge angeordnet. Zwei benachbarte Lichtsender, die auf dem Zug angeordnet sind, sind so angeordnet, dass optische Lichtbilder von den beiden benachbarten Lichtsendern zur optischen Faser einen Überlappungsbereich in Bezug auf die Fahrtrichtung aufweisen.

Nachteilig bei den oben beschriebenen Schleifleitungssystemen ist also u.a. die Empfindlichkeit der bekannten berührungslosen Funkdatenübertragung gegenüber elektrischen Vorfällen an den leistungsübertragenden Schleifleitungen, Störungen durch anderen Funkverbindungen und die Empfindlichkeit gegenüber einer korrosiven Umgebung.

Aufgabe der Erfindung ist es deshalb, eine Schleifleitung, einen Stromabnehmer, ein Schleifleitungssystem sowie ein Verfahren zur berührungslosen Datenübertragung bereitzustellen, welche die oben genannten Nachteile überwinden und eine einfache und sichere, höchstzuverlässige und möglichst störungsarme bzw. störungsfreie und gegen äußere Einflüsse unempfindliche Datenübertragung mit hohem Übertragungsvolumen ermöglichen.

Die Erfindung löst die Aufgabe durch eine Schleifleitung mit den Merkmalen des Anspruchs 1, einen Stromabnehmer mit den Merkmalen des Anspruchs 6, ein Schleifleitungssystem mit den Merkmalen des Anspruchs 11, sowie ein Verfahren zur berührungslosen Datenübertragung mit den Merkmalen des Anspruchs 14. Vorteilhafte Weiterbildungen und Ausgestaltungen der Erfindung sind in den Unteransprüchen angegeben.

Eine eingangs genannte Schleifleitung ist erfindungsgemäß dadurch gekennzeichnet, dass die Schleifleitung als längliches Hohlprofil mit einem in Längsrichtung verlaufenden Hohlraum und einem in Längsrichtung verlaufenden Längsschlitz ausgebildet ist, wobei die erste optische Übertragungseinheit in dem Hohlraum angeordnet ist.

Dabei kann die erste optische Übertragungseinheit in Längsrichtung eine Vielzahl von optischen Sendern und/oder Empfängern zur Datenübertragung mit mindestens einem optischen Empfänger bzw. Sender der zweiten optischen Übertragungseinheit aufweisen. In einer vorteilhaften Fortbildung können die optischen Sender bzw. Empfänger der ersten optischen Übertragungseinheit zum Abstrahlen von Lichtsignalen in Längsrichtung bzw. zu deren Empfang zumindest teilweise in Längsrichtung ausgerichtet sein.

In einer weiteren Ausführung der Erfindung kann die erste optische Übertragungseinheit bandförmig ausgebildet sein.

Alternativ oder zusätzlich können zumindest einige der optischen Sender bzw. Empfänger der ersten optischen Übertragungseinheit in Längsrichtung in einem vorgegebenen maximalen Abstand voneinander beabstandet angeordnet sein.

Weiter kann an der Schleifleitung eine Halterung zur Aufnahme der ersten optischen Übertragungseinheit angeordnet sein. Insofern muss die erste optische Übertragungseinheit nicht in oder unmittelbar direkt an der Schleifleitung beziehungsweise deren Leitersträngen angeordnet sein, sondern kann als eigenständiges Modul auch parallel zu der Schleifleitung geführt werden. Insbesondere vorteilhaft kann die erste optische Übertragungseinheit in einem längs der Schleifleitung verlaufenden Gehäuse angeordnet sein, welches insbesondere auch noch nachträglich nachgerüstet werden kann. Maßgeblich für die räumliche Zuordnung der ersten optischen Übertragungseinheit zur Schleifleitung ist, dass sie in Längsrichtung entlang der Schleifleitung verläuft.

In einer montagetechnisch günstigen Fortbildung kann die Schleifleitung eine Kastenschleifleitung sein und die erste optische Übertragungseinheit in einer für einen elektrischen Schleifkontakt vorgesehenen Halterung angeordnet sein. Hierzu muss keine extra Halterung für die erste optische Übertragungseinheit vorgesehen werden, was insbesondere bei der Nachrüstung bestehender Kastenschleifleitungen sinnvoll ist. Entsprechend kann die erste optische Übertragungseinheit auch derart ausgebildet sein, dass sich in bereits bestehende Halterungen von anderen Elementen bei anderen Schleifleitung Typen eingesetzt werden kann.

Ein eingangs genannter Stromabnehmer ist erfindungsgemäß dadurch gekennzeichnet, dass die zweite optische Übertragungseinheit an einem mit dem Verbraucher verfahrbaren Träger angeordnet ist, der durch den Längsschlitz in den Hohlraum eingreift, oder dass die zweite optische Übertragungseinheit an einem der ersten optischen Übertragungseinheit zugewandten oberen Ende eines durch den Längsschlitz in den Hohlraum ragenden Teils eines Stromabnehmerwagens angeordnet ist..

Dabei kann die zweite optische Übertragungseinheit mindestens einen optischen Sender und/oder Empfänger zur Datenübertragung mit mindestens einem optischen Empfänger bzw. Sender der ersten optischen Übertragungseinheit aufweisen. Vorteilhaft kann der mindestens eine optische Sender und/oder Empfänger der zweiten optischen Übertragungseinheit zum Abstrahlen von Lichtsignalen in Längsrichtung bzw. zu deren Empfang zumindest teilweise in Längsrichtung ausgerichtet sein.

Vorteilhaft können bei der oben und nachfolgend beschriebene Schleifleitung und/oder Stromabnehmer die Sender eine Lichtquelle, insbesondere eine infrarote Lichtquelle, aufweisen. Dabei können die Lichtquelle zum Abstrahlen hochfrequenter Lichtpulse und die Empfänger zum Empfangen dieser Lichtpulse eingerichtet sein. Weiter kann vorteilhaft das von den optischen Sendern der ersten optischen Übertragungseinheit ausgesendet optische Datensignal von dem von den optischen Sendern der zweiten optischen Übertragungseinheit ausgesendeten optischen Datensignal unterscheidbar sein, insbesondere durch unterschiedliche Frequenzen der Lichtpulse. Vorteilhaft können die erste optische Übertragungseinheit und die zweite optische Übertragungseinheit jeweils mit einer Steuerung verbunden sein.

Ein eingangsgenanntes Schleifleitungssystem ist erfindungsgemäß dadurch gekennzeichnet, dass die Schleifleitung als längliches Hohlprofil mit einem in Längsrichtung verlaufenden Hohlraum und einem in Längsrichtung verlaufenden Längsschlitz ausgebildet ist, wobei die erste optische Übertragungseinheit in dem Hohlraum angeordnet ist. Dabei kann vorteilhaft die Schleifleitung wie oben und nachfolgend beschrieben ausgebildet sein und/oder die zweite optische Übertragungseinheit an einem wie oben und nachfolgend beschriebenen Stromabnehmer des Verbrauchers angeordnet sein. Insbesondere können vorteilhaft die optischen Sender bzw. Empfänger der ersten optischen Übertragungseinheit und die optischen Empfänger bzw. Sender der zweiten optischen Übertragungseinheit aufeinander zugerichtet sein.

Ein eingangs genanntes Verfahren zur berührungslosen Datenübertragung bei einem wie oben und nachfolgend beschriebenen Schleifleitungssystem ist dadurch gekennzeichnet, dass die optischen Sender der ersten optischen Übertragungseinheit ein optisches Datensignal in Form hochfrequenter optischer Signalpulse aussenden.

Dabei kann vorteilhaft das von den optischen Sendern der ersten optischen Übertragungseinheit ausgesendet optische Datensignal von dem von den optischen Sendern der zweiten optischen Übertragungseinheit ausgesendeten optischen Datensignal unterscheidbar sein. Bevorzugt können die optischen Sender der ersten optischen Übertragungseinheit alle das gleiche optische Datensignal aussenden.

In einer günstigen Weiterbildung kann das Datensignal von einem ersten optischen Sender der ersten optischen Übertragungseinheit ausgesendet werden, dann von einem in Längsrichtung beabstandet zu diesem angeordneten ersten optischen Empfänger der ersten optischen Übertragungseinheit empfangen werden, dann das empfangene optische Datensignal elektrisch oder optisch an einen in Längsrichtung beabstandet vom ersten optischen Sender angeordneten zweiten optischen Sender der ersten optischen Übertragungseinheit weitergeleitet werden, und dann von dem zweiten optischen Sender das optische Datensignal ausgesendet werden. Vorteilhaft kann dabei das von dem ersten optischen Sender der ersten optischen Übertragungseinheit ausgesendete optische Datensignal von einem optischen Empfänger der verfahrbaren zweiten optischen Übertragungseinheit empfangen werden, und ein optischer Sender der verfahrbaren zweiten optischen Übertragungseinheit das optische Datensignal bevorzugt in Fahrtrichtung wieder aussenden. Insbesondere kann bevorzugt das Datensignal zwischen dem ersten optischen Empfänger und dem zweiten optischen Sender der ersten optischen Übertragungseinheit und/oder zwischen dem optischen Empfänger und dem optischen Sender der verfahrbaren zweiten optischen Übertragungseinheit verstärkt werden.

Die Erfindung wird nachfolgend anhand von detaillierten Ausführungsbeispielen mit Bezug auf die begleitenden Zeichnungen beschrieben. Diese zeigen:
- **Fig. 1**: eine seitliche Draufsicht auf einen Abschnitt eines erfindungsgemäßen Schleifleitungssystems;
- **Fig. 2**: eine stirnseitige, schnittähnliche Draufsicht auf das Schleifleitungssystem aus Fig. 1;
- **Fig. 3**: eine Detailansicht aus Fig. 2;
- **Fig. 4**: eine stirnseitige Draufsicht auf eine alternative Ausgestaltung eines erfindungsgemäßen Schleifleitungssystems;
- **Fig. 5**: einen Querschnitt durch das Schleifleitungssystem aus Fig. 4;
- **Fig. 6**: einen in Längsrichtung verlaufenden Querschnitt durch eine schematische Darstellung des Schleifleitungssystem aus Fig. 4;
- **Fig. 7**: den Querschnitt aus Fig. 6 mit einer alternativen Ausführungsform der Erfindung;
- **Fig. 8**: den Querschnitt aus Fig. 6 mit einer weiteren alternativen Ausführungsform der Erfindung.

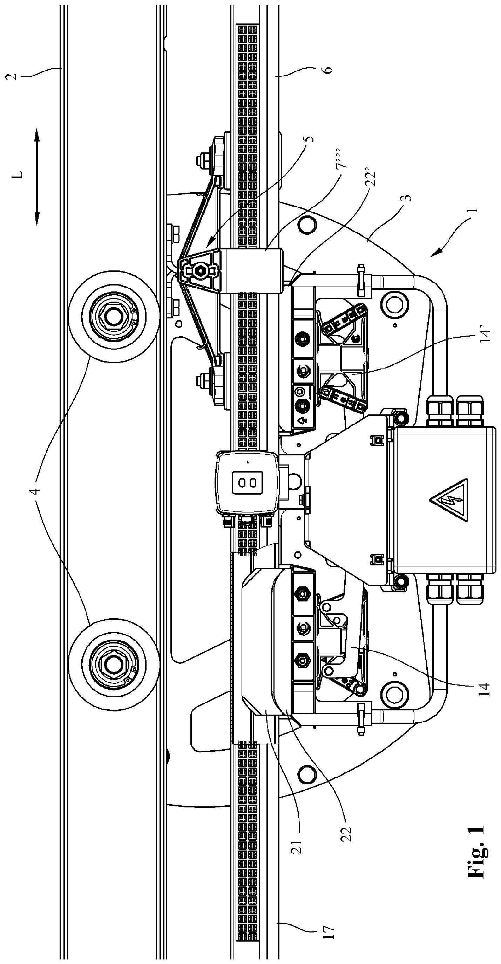

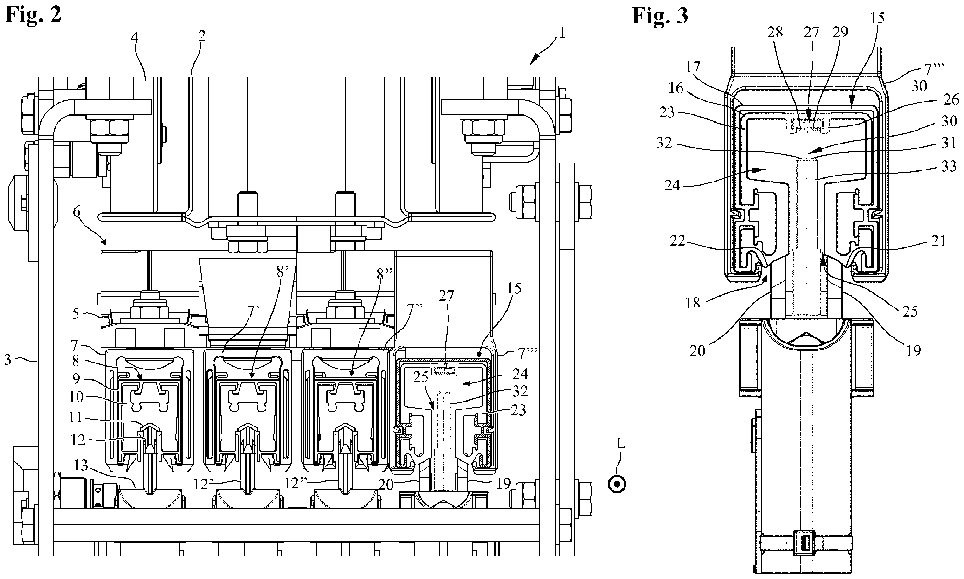

Fig. 1 zeigt eine seitliche Draufsicht auf einen Abschnitt eines erfindungsgemäßen Schleifleitungssystems 1, dessen Aufbau in wesentlichen Teilen dem in der DE 10 2014 107 466 A1 beschriebenen Schleifleitungssystems gleicht. Insofern wird der Offenbarungsgehalt der DE 10 2014 107 466 A1, soweit er deren Figuren 1, 2 und 2a und der zugehörigen Beschreibung betrifft, zum Gegenstand der vorliegenden Anmeldung gemacht.

Das Schleifleitungssystems 1 hat einen im Wesentlichen Doppel-U-förmigen Schienenstrang 2. An dem Schienenstrang 2 ist ein Stromabnehmer 3 eines nicht gezeichneten elektrischen Verbrauchers mit Laufrollen 4 in eine Längsrichtung L verfahrbar. Der Stromabnehmer 3 dient zur Versorgung des längs des Schienenstrangs 2 verfahrbaren elektrischen Verbrauchers, beispielsweise eines Containerkrans.

An der unteren Seite des Schienenstrangs 2 ist mittels in Längsrichtung L des Schienenstrangs 2 voneinander beabstandet angebrachten Schleifleitungshalterungen 5 eine erfindungsgemäße Schleifleitung 6 nach unten hängend angebracht. Die Schleifleitung 6 weist dabei in Fig. 2 bis 5 gut erkennbar drei nebeneinander angeordnete Leiterstranghalterungen 7, 7' und 7" zur Halterung von länglichen Phasenleitersträngen 8, 8' und 8" auf. Da die Phasenleiterstränge 8' und 8" identisch zum Phasenleiterstrang 8 ausgebildet sind, gelten die zum Phasenleiterstrang 8 gemachten Ausführungen entsprechend.

Der Phasenleiterstrang 8 weist ein längliches Isolierprofil 9 auf, welches von der Leiterstranghalterung 7 gehalten wird. In das Isolierprofil 9 ist dann wiederum ein längliches, elektrisch leitendes Phasenleiterprofil 10 mit ebenfalls elektrisch leitender länglicher Schleiffläche 11, bevorzugt aus Aluminium oder Stahl, eingesetzt.

An der Schleiffläche 11 schleift ein Schleifkontakt 12, welcher an einem Schleifkontaktträger 13 des Stromabnehmers 3 angeordnet ist. Der Schleifkontaktträger 13 mit Schleifkontakt 12 kann in an sich bekannter Weise über einen in Fig. 1 exemplarisch gezeigten, an sich bekannte Zustellmechanismus 14 an die Schleiffläche 11 heran und von dieser weg bewegt werden. Im Betrieb wird der Schleifkontakt 12 ständig an die Schleiffläche 11 angedrückt, beispielsweise über Federkraft. In Fig. 2 gezeigte weitere Schleifkontakte 12' bzw. 12" mit zugehörigen Schleifkontaktträgern sind weitgehend identisch zum Schleifkontakt 12 und Schleifkontaktträger 13 ausgebildet, so dass die hierzu gemachten Ausführungen entsprechend gelten. Insbesondere weist jeder Schleifkontakt 12, 12' bzw. 12" einen eigenen Zustellmechanismus 14 auf.

Der Phasenleiterstrang 8 dient der Energieversorgung des verfahrbaren Verbrauchers und steht im Normalbetrieb unter Spannung, so dass Strom über die Schleiffläche 11 zu dem Schleifkontakt 12 fließt. Die oben beschriebene Ausbildung ist dem Fachmann grundsätzlich bekannt und Bedarf keiner weiteren Ausführungen.

Zusätzlich ist bei einem solchen Schleifleitungssystem 1 üblicherweise ein Erdungsleiterstrang 15 zur Verbindung des verfahrbaren elektrischen Verbrauchers mit dem Erdpotential des Schleifleitungssystems 1 vorgesehen. Der Erdungsleiterstrang 15 wird nachfolgend vor allem anhand der Detailzeichnung Fig. 3 beschrieben.

Der Erdungsleiterstrang 15 weist hierzu ein elektrisch leitendes Erdungsleiterprofil 16 auf, das von einem im wesentlichen U-förmigen Erdungsisolierprofil 17 mit einer in Fig. 3 nach unten offenen Kontaktöffnung 18 umgeben ist. Der Erdungsleiterstrang 15 ist mit einer Leiterstranghalterung 7''' wie die Phasenleiterstränge 8, 8', 8" an der Schleifleitung 6 befestigt. Wie in Fig. 1 bis 3 gut erkennbar, sind am Stromabnehmer 3 ein rechter Erdungsschleifkontakt 19 bzw. ein linker Erdungsschleifkontakt 20 sowie eine zwischen diesen angeordnete, elektrisch von den Erdungsschleifkontakten 19, 20 isoliert Antenne 21 vorgesehen. Die Erdungsschleifkontakte 19, 20 können über den Zustellmechanismus 14 angehoben und dadurch in Kontakt mit entsprechenden Erdungsschleifkontaktflächen 21 bzw. 22 des Erdungsleiterprofils 16 gebracht und gehalten werden, wie oben bereits beschrieben.

Das Erdungsleiterprofil 16 ist dabei als im wesentlichen T-förmiges Hohlprofil 23 mit einem Hohlraum 24 ausgebildet, der in eine rechte bzw. linke Schlitzwandung eines nach unten geöffneten Längsschlitzes 25 übergeht. Dabei weist der Längsschlitz 25 in die gleiche Richtung wie die nach unten offene Kontaktöffnung 18.

Weiter ist an der dem Längsschlitz 25 gegenüberliegenden oberen Wandung des Hohlprofils 23 eine Halterung 26 vorgesehen, in die eine als LED-Band ausgebildete ortsfeste, leitungsseitige optische Übertragungseinheit 27 eingelegt ist. Die Halterung 26 kann dabei in Längsrichtung L durchgehend sein, oder auch nur stellenweise die optische Übertragungseinheit 27 in der Fig. 3 gezeigten Stellung halten. Die bandförmige Übertragungseinheit 27 kann dabei bevorzugt etwas flexibel, aber dennoch formstabil ausgebildet sein, um einfach in die Halterung 26 eingeschoben, eingezogen oder eingeklippst werden zu können.

Zur optischen Datenübertragung zwischen der Schleifleitung 6 und dem beweglichen Verbraucher weist die optische Übertragungseinheit 27 schleifleitungsseitig als Leuchtdioden ausgebildete ortsfeste optische Sender 28 und als Fotodioden ausgebildete optische Empfänger 29 auf, welche mit an einem mit dem Verbraucher verfahrbaren Träger 33 angeordneten verbraucherseitigen optischen Empfängern 32 bzw. optischen Sendern 31 einer verbraucherseitigen, in Längsrichtung L längs der Schleifleitung 6 verfahrbaren optischen Übertragungseinheit 30 zusammenwirken. Anstelle von Dioden können aber auch andere geeignete optische Sender und Empfänger, insbesondere Lichtquellen und -empfänger, bevorzugt für Infrarotes oder sichtbares Licht, verwendet werden. Der in Längsrichtung L ausgerichtete verbraucherseitige Träger 33 greift hierzu durch den Längsschlitz 25 in den Hohlraum 24 ein und kann vorteilhaft über den Zustellmechanismus 14 angehoben werden, wie oben bereits beschrieben.

Die Datenübertragung erfolgt dabei auf optischem Weg beispielsweise über die an sich bekannte Li-Fi-Netzwerktechnologie oder Visual Light Communication (VLC), wobei hochfrequentes Licht oder Licht mit einem hochfrequenten Anteil Daten mit hoher Übertragungsrate überträgt. Dazu müssen die optischen Sender 28, 31 zum Abstrahlen eines derartigen Lichtdatensignals und die optischen Empfänger 29 bzw. 32 zum Empfangen dieser Lichtdatensignale geeignet sein. Die konkrete Ausgestaltung ist dem Fachmann bekannt.
Weiter sind die optischen Übertragungseinheiten 27, 30 in an sich bekannter Weise mit jeweiligen Steuereinrichtungen verbunden, welche die Daten in die jeweils sendende optische Übertragungseinheit einspeisen bzw. von der jeweils empfangenden optischen Übertragungseinheit empfangen und gegebenenfalls auch die optischen Übertragungseinheiten 27, 30 ansteuern. Dabei kann die Umwandlung und Aufbereitung der Daten für die optische Übertragung als Lichtdatensignale in den Steuereinrichtungen erfolgen, oder gegebenenfalls auch über in den optischen Übertragungseinheiten 27, 30 integrierte elektronische Ansteuerung erfolgen.

Bevorzugt sind dabei die Sender 28, 31 bzw. Empfänger 29, 32 möglichst gut so aufeinander ausgerichtet, dass die Lichtdatensignale auf möglichst kurzem, direktem und unverstelltem Weg übertragen werden können. Hierzu weisen die Sender 28, 31 mit ihrer Hauptstrahlrichtung in Richtung der Empfänger 29, 32.

Grundsätzlich reicht es bereits aus, wenn an dem verfahrbaren Träger 33 jeweils einen optische Sender 31 und ein optische Empfänger 32 angeordnet ist. Um die Ausfallsicherheit zu erhöhen, können dort aber bevorzugt auch mehrere optische Sender 31 und optische Empfänger 32 angeordnet werden.

Zudem kann das Hohlprofil 23 dabei vorteilhaft zum einen der Abschirmung der optischen Datenübertragung gegenüber einer von außen kommenden Beeinflussung durch andere Lichtquellen dienen, und zum anderen dazu, die Datenübertragung nach außen abzuschirmen, um ein Auslesen der Daten zu verhindern. Dabei kann das Hohlprofil bevorzugt aus einem gegen Korrosion unempfindlichen Material, insbesondere Kunststoff bestehen. Es ergibt sich also eine zuverlässige und auch datensicherheitstechnisch sichere Datenübertragung, da de facto keine nennenswerte Abstrahlung nach außen erfolgt.

Da im Normalbetrieb über die Erdungsschleifkontakte 21, 22 keine elektrische Leistung übertragen wird, besteht schon deshalb keine Gefahr, dass es zwischen Erdungsleiterprofil 16 und Erdungsschleifkontakten 21, 22 zu Funkenüberschlägen kommt, welche die Datenübertragung mittels der leitungsseitigen optischen Übertragungseinheit 27 und der abnehmerseitigen Übertragungseinheit 28 nachteilig beeinflussen. Aber selbst wenn der Fall eines Stromflusses zum Erdungsleiterstrang mit evtl. Funkenüberschlägen auftreten würde, würden diese die optische Datenübertragung nicht nachteilig beeinflussen.

Das Erdungsleiterprofil 16 und das Hohlprofil 23 sind vorliegend einstückig aus dem gleichen Material gefertigt und bilden somit eine Baueinheit, wodurch die Fertigung und der Einbau vereinfacht werden können. Erdungsleiterprofil 16 und Hohlprofil 23 können aber auch aus separaten Teilen und/oder unterschiedlichen Materialien gefertigt werden. Auch kann das Hohlprofil 23 einen anderen geeigneten Querschnitt aufweisen.

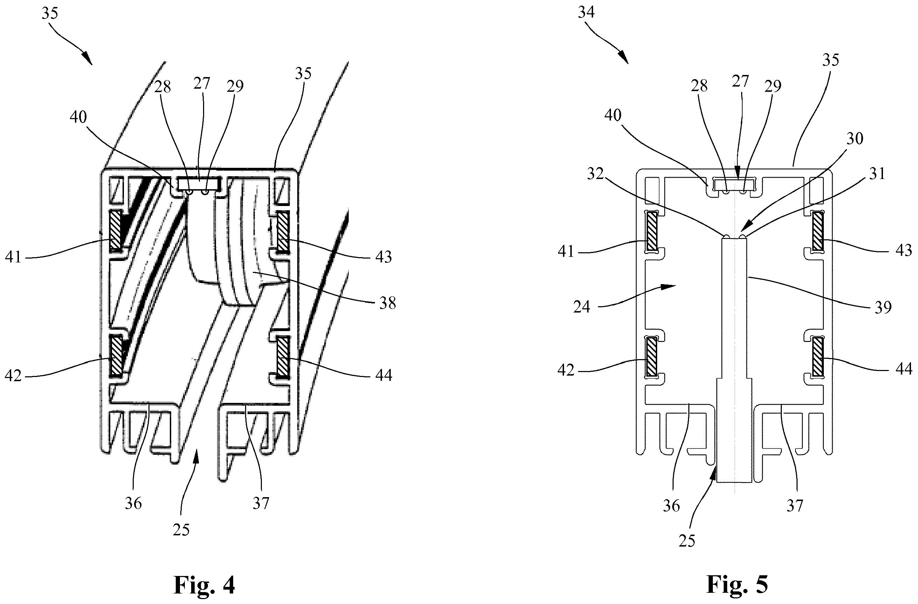

Fig. 4 und 5 zeigen eine stirnseitige Draufsicht sowie einen Querschnitt auf eine alternative Ausgestaltung eines erfindungsgemäßen Schleifleitungssystems 34 basierend auf einer aus der DE 296 02 589 U1 bekannten Kastenschleifleitung 35. Zur einfacheren Beschreibung werden nachfolgend gleiche oder sich entsprechende Teile aus dem ersten Ausführungsbeispiel nach Figuren 1 bis 3 mit denselben Bezugszeichen und Bezeichnungen gekennzeichnet. Die obigen Ausführungen hierzu gelten dann, soweit übertragbar, entsprechend.

Die Kastenschleifleitung 35 ist aus einem Hohlprofil aus einen isolierenden Material, insbesondere Kunststoff, gebildet. Darin verfährt auf Laufflächen 36, 37 in an sich bekannter Weise ein auf Rollen 38 gelagerter, in Fig. 5 lediglich angedeuteter Stromabnehmerwagen 39. Wie in Fig. 5 schematisch angedeutet, ragt dabei ein Teil des Stromabnehmerwagens 39 wiederum durch einen Längsschlitz 25 der Kastenschleifleitung 35. Üblicherweise werden dabei die Stromversorgungsleitungen zum Verbraucher durch den Längsschlitz 25 geführt.

Das Hohlprofil der Kastenschleifleitung 35 weist innenseitig Halterungen 40 zur Aufnahme von Schleifkontakte bildenden Stromschienen 41 bis 44 auf, wobei in Fig. 5 lediglich die an der oberen Deckenwandung der Kastenschleifleitung 35 befindliche Halterung 40 eigens mit einer Bezugsziffer versehen ist.

In der oberen Halterung 40 ist jedoch keine Stromschiene eingesetzt, sondern eine ortsfeste optische Übertragungseinheit 27 mit daran angeordneten optischen Sendern 28 bzw. Empfänger 29 wie oben beschrieben. Als Gegenstück dient wiederum die optische Übertragungseinheit 30 mit ihrem optischen Sender 31 bzw. Empfänger 32, welche an einem der ortsfesten optischen Übertragungseinheit 27 zugewandten oberen Ende des Stromabnehmerwagens 39 angeordnet sind.

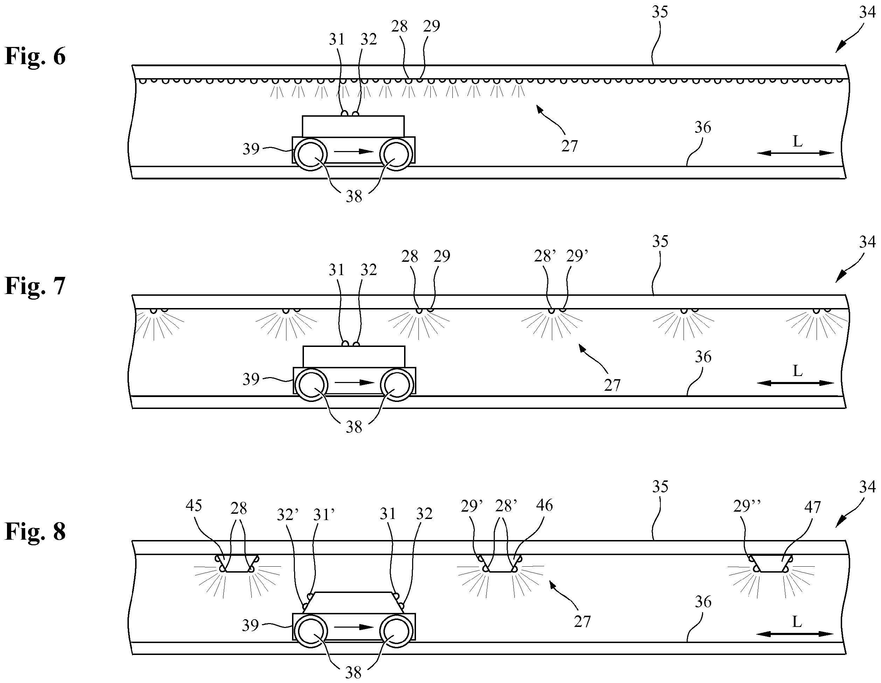

Die Fig. 6 bis 8 zeigen ganz schematische unterschiedliche Ausführungen der Erfindung jeweils anhand eines in Längsrichtung verlaufenden Querschnitts durch das Schleifleitungssystem aus Fig. 4 und 5. die beschriebenen Ausführungen können aber ohne weiteres auch bei dem in Fig. 1 bis 3 gezeigten Ausführungsbeispiel eingesetzt werden.

Die Ausführung in Fig. 6 zeigt wieder die ortsfeste optische Übertragungseinheit 27 in Form eines LED-Bandes. Dabei wechseln sich die optischen Sender 28 und optischen Empfänger 29 ab, wobei aus Gründen der einfacheren Darstellung hier nur der eine Sender 28 und Empfänger 29 mit Bezugsziffern bezeichnet sind. Der Stromabnehmerwagen 39 fährt in die mit dem Pfeil gekennzeichnete Fahrtrichtung, also in Längsrichtung L der Kastenschleifleitung 35. Dabei senden die optischen Sender 28 nur in einem Bereich oberhalb und etwas dem Stromabnehmerwagens 39 vorauseilend, wodurch Energie eingespart werden kann, da in nicht befahrenen Streckenabschnitten nicht gesendet werden muss. Ebenso gut können aber auch alle Sender 28 senden, wodurch die Ansteuerung der ortsfesten ersten optischen Übertragungseinheit 27 vereinfacht werden kann, da nicht nachverfolgt werden muss, wo sich der Stromabnehmerwagen 39 gerade befindet.

In diesem Ausführungsbeispiel senden alle Sender 28 jeweils zeitgleich das gleiche optische Datensignal, um sicherzustellen, dass beim Empfänger 32 des Stromabnehmerwagens 39 stets ein eindeutiges Datensignal empfangen werden kann.

In der in Fig. 7 dargestellten alternativen Ausführung der Erfindung ist kein durchgängiges LED-Band als erste optische Übertragungseinheit 27 vorgesehen. Vielmehr sind jeweils Paare von optischen Sendern 28 und Empfängern 29 der ersten optischen Übertragungseinheit 27 in einem vorgegebenen Abstand vom jeweils nächsten Sender-Empfänger-Paar 28', 29' angeordnet. Dabei ist der Abstand so gewählt, dass eine zuverlässige Datenübertragung sichergestellt wird, also dass sich die von den ersten bzw. zweiten Sender-Empfänger-Paaren gesendeten optischen Datensignale bevorzugt überschneiden.

In einer vorteilhaften Weiterbildung können der Sender 28 und Empfänger 29 auch nicht nahe beieinander angeordnet werden, sondern ebenfalls im Abstand. Bei der in Fig. 7 gezeigten Ausführung würden dann die Empfänger 29, 29' vorteilhaft möglichst mittig zwischen den Sendern 28, 28' angeordnet. Somit könnte eine nachteilige Beeinflussung eines vom optischen Sender 31 des Stromabnehmerwagens 39 gesendeten optischen Datensignals durch die von den optischen Sendern 28, 28' abgesendeten optischen Datensignale verringert werden, da die optischen Datensignale im Bereich zwischen den optischen Sendern 28, 28' am schwächsten sind.

Eine alternative Ausführung kann vorsehen, dass die Unterscheidungen zwischen dem von dem ortsfesten optischen Sender 28 abgesendeten optischen Datensignal und dem von dem optischen Sender 31 des Stromabnehmerwagens 39 abgesendeten optischen Datensignal dadurch erfolgt, dass die beiden Sender 28, 31 mit optischen Datensignalen unterschiedlicher Frequenz senden.

Die in Fig. 8 gezeigte alternative Ausführung sieht entsprechend der in Fig. 7 gezeigten Ausführung vor, dass Paare von optischen Sendern 28 und optischen Empfängern 29 jeweils im Abstand vom jeweils nächsten 28' Strich, 29' angeordnet sind. Dabei sind die Paare jeweils zusätzlich noch an abschrägen Halterungen 45, 46 bzw. 47 angeordnet, und strahlen schräg nach unten in die Kastenschleifleitung 35. Entsprechend sind am Stromabnehmerwagen 39 die optischen Sender 31 und Empfänger 32 der zweiten, verfahrbaren optischen Übertragungseinheit 30 schräg nach oben gerichtet. Zusätzlich sind dabei sowohl an den Halterungen 45 bis 47 als auch am Stromabnehmerwagen 39 die optische Sender 28, 28', 31, 31' bzw. Empfänger 29, 29', 32, 32' in und gegen die Fahrtrichtung angeordnet. Hierdurch können die optischen Datensignale der optischen Sender 28, 28' bzw. 31, 31' vorteilhaft in die Richtung des jeweiligen optischen Empfängers 32, 32' bzw. 29, 29' abgesendet werden.

Weiter sieht diese Ausführung vor, dass das in Fig. 8 mittlere Paar von optischen Sendern 28' und Empfänger 29' selbst nicht mit der Steuerung des Schleifleitungssystems 34 verbunden ist, sondern lediglich als sogenannter Repeater arbeiten. Dies bedeutet, dass das Datensignal von der Steuerung beispielsweise nur an der ersten Halterung 45 eingespeist werden muss, von wo aus der erste optische Sender 28 der ersten optischen Übertragungseinheit 27 das Datensignal sowohl an den optischen Empfänger 32' des Stromabnehmerwagens 39 als auch an den optischen Empfänger 29' der in Fahrtrichtung nachfolgenden Halterung 46 sendet. Dort wird das optische Datensignal bevorzugt in einem Verstärker verstärkt und dann über die optischen Sender 28' ausgestrahlt. Hierdurch kann der Verkabelungs- und Anschlussaufwand vereinfacht werden, da nicht jeder optische Sender 28' längs der Schleifleitung 34 eigens mit der Steuerung verbunden werden muss. Dies ist insbesondere dann hilfreich, wenn die Schleifleitung 34 an bestimmten Stellen schlecht zugänglich ist. Gegebenenfalls kann auf diese Weise das optische Datensignal auch über mehrere, verteilte optische Sender weitergereicht werden, so dass nur relativ wenige Einspeisestellen vorgesehen werden müssen. Die elektrische Stromversorgung der als Repeater dienenden Sender 28' kann dann in relativ einfacher Weise direkt über die in der Kastenschleifleitung enthaltenen stromführenden Stromschienen 41 bis 44 erfolgen.

Für den Fall einer nur unidirektionalen Signalübertragung sind auf der Senderseite natürlich keine Empfänger notwendig, während auf der Empfängerseite keine Sender notwendig sind.

Sind aber auf beiden Seiten sowohl Sender als auch Empfänger vorhanden, kann vorteilhaft eine bidirektionale Datenübertragung erfolgen.

### Bezugszeichen

- 1: Schleifleitungssystem
- 2: Schienenstrang
- 3: Stromabnehmer
- 4: Laufrollen
- 5: Schleifleitungshalterungen
- 6: Schleifleitung
- 7, 7', 7": Leiterstranghalterungen
- 8, 8', 8": Phasenleiterstränge
- 9: Isolierprofil
- 10: Phasenleiterprofil
- 11: Schleiffläche Phasenleiterstrang
- 12, 12', 12": Schleifkontakt
- 13: Schleifkontaktträger
- 14: Zustellmechanismus
- 15: Erdungsleiterstrang
- 16: Erdungsleiterprofil
- 17: Erdungsisolierprofil
- 18: Kontaktöffnung Erdungsiso lierprofil
- 19: rechter Erdungsschleifkontakt
- 20: linker Erdungsschleifkontakt
- 21: rechte Erdungsschleifkontaktfläche
- 22: linke Erdungsschleifkontaktfläche
- 23: Hohlprofil
- 24: Hohlraum
- 25: Längsschlitz
- 26: Halterung für ortsfeste optische Übertragungseinheit
- 27: ortsfeste optische Übertragungseinheit
- 28, 28': schleifleitungsseitige optische Sender
- 29, 29', 29": schleifleitungsseitige optische Empfänger
- 30: verbraucherseitige verfahrbare optische Übertragungseinheit
- 31, 31': verbraucherseitige optische Sender
- 32, 32': verbraucherseitige optische Empfänger
- 33: wagenseitiger Träger für wagenseitige Übertragungseinheit
- 34: alternatives Schleifleitungssystem
- 35: Kastenschleifleitung
- 36,37: Laufflächen
- 38: Laufrollen
- 39: Stromabnehmerwagen
- 40: Halterungen für Stromschienen
- 41-44: Stromschienen
- 45-47: schräge Halterungen für schleifleitungsseitige Sender und Empfänger

- L: Längsrichtung Schleifleitung

## Patentansprüche

1. Schleifleitung (6; 35) zur Versorgung mindestens eines an der Schleifleitung (6; 35) in deren Längsrichtung (L) verfahrbaren elektrischen Verbrauchers mit elektrischer Energie, mit mindestens einem in Längsrichtung (L) verlaufenden Leiterstrang (15) mit einem elektrisch leitenden Leiterprofil (10, 16) zur Kontaktierung mit einem Schleifkontakt (21, 22) des Verbrauchers, wobei an der Schleifleitung (6; 35) eine in Längsrichtung (L) verlaufende erste optische Übertragungseinheit (27) zur berührungslosen Datenübertragung mit einer gegenüber der Schleifleitung (6; 35) verfahrbaren zweiten optischen Übertragungseinheit (30) angeordnet ist, **dadurch gekennzeichnet, dass** die Schleifleitung (6; 35) als längliches Hohlprofil (24) mit einem in Längsrichtung (L) verlaufenden Hohlraum (25) und einem in Längsrichtung (L) verlaufenden Längsschlitz (28) ausgebildet ist, wobei die erste optische Übertragungseinheit (27) in dem Hohlraum (25) angeordnet ist.

2. Schleifleitung (6; 35) nach Anspruch 1, **dadurch gekennzeichnet, dass** die erste optische Übertragungseinheit (27) in Längsrichtung (L) eine Vielzahl von optischen Sendern (28) und/oder Empfängern (29) zur Datenübertragung mit mindestens einem optischen Empfänger (32) bzw. Sender (31) der zweiten optischen Übertragungseinheit (27) aufweist.

3. Schleifleitung (6; 35) nach Anspruch 2, **dadurch gekennzeichnet, dass** die optischen Sender (28) bzw. Empfänger (29) der ersten optischen Übertragungseinheit (27) zum Abstrahlen von Lichtsignalen in Längsrichtung (L) bzw. zu deren Empfang zumindest teilweise in Längsrichtung (L) ausgerichtet sind.

4. Schleifleitung (6; 35) nach einem der voranstehenden Ansprüche, **dadurch gekennzeichnet, dass** zumindest einige der optischen Sender (28) bzw. Empfänger (29) der ersten optischen Übertragungseinheit (27) in Längsrichtung (L) in einem vorgegebenen maximalen Abstand (A) voneinander beabstandet angeordnet sind.

5. Schleifleitung (6; 35) nach einem der voranstehenden Ansprüche, **dadurch gekennzeichnet, dass** die erste optische Übertragungseinheit (27) in einem längs der Schleifleitung (6; 35) verlaufenden Gehäuse angeordnet ist.

6. Stromabnehmer (3) zur Versorgung mindestens eines an einer Schleifleitung (6; 35) in deren Längsrichtung (L) verfahrbaren elektrischen Verbrauchers mit elektrischer Energie, wobei der Stromabnehmer (3) mindestens einen Schleifkontakt (21, 22) zur Kontaktierung mit einem elektrisch leitenden Leiterprofil (10, 16) eines Leiterstrangs (15) der Schleifleitung (6; 35) aufweist, wobei am Stromabnehmer (3) eine in Längsrichtung (L) gegenüber der Schleifleitung (6; 35) verfahrbare zweite optische Übertragungseinheit (30) zur berührungslosen Datenübertragung mit einer an der Schleifleitung (6; 35) angeordneten ersten optischen Übertragungseinheit (27) angeordnet ist, wobei die Schleifleitung (6; 35) als längliches Hohlprofil (24) mit einem in Längsrichtung (L) verlaufenden Hohlraum (25) und einem in Längsrichtung (L) verlaufenden Längsschlitz (28) ausgebildet ist, wobei die erste optische Übertragungseinheit (27) in dem Hohlraum (25) angeordnet ist, **dadurch gekennzeichnet, dass** die zweite optische Übertragungseinheit (30) an einem mit dem Verbraucher verfahrbaren Träger (33) angeordnet ist, der durch den Längsschlitz (25) in den Hohlraum (24) eingreift, oder dass die zweite optische Übertragungseinheit (30) an einem der ersten optischen Übertragungseinheit (27) zugewandten oberen Ende eines durch den Längsschlitz in den Hohlraum (24) ragenden Teils eines Stromabnehmerwagens (39) angeordnet ist.

7. Stromabnehmer (3) nach Anspruch 6, **dadurch gekennzeichnet, dass** die zweite optische Übertragungseinheit (30) mindestens einen optischen Sender (31) und/oder Empfänger (32) zur Datenübertragung mit mindestens einem optischen Empfänger (29) bzw. Sender (28) der ersten optischen Übertragungseinheit (27) aufweist.

8. Stromabnehmer (3) nach Anspruch 7, **dadurch gekennzeichnet, dass** der mindestens eine optische Sender (28) und/oder Empfänger (29) der zweiten optischen Übertragungseinheit (27) zum Abstrahlen von Lichtsignalen in Längsrichtung (L) bzw. zu deren Empfang zumindest teilweise in Längsrichtung (L) ausgerichtet ist.

9. Schleifleitung (6; 35) nach einem der Ansprüche 1 bis 5 und/oder Stromabnehmer (3) nach Anspruch 6 oder 8, **dadurch gekennzeichnet, dass** die Sender (28; 31) eine Lichtquelle, insbesondere eine infrarote Lichtquelle, aufweisen.

10. Schleifleitung (6; 35) und/oder Stromabnehmer (3) nach Anspruch 9, **dadurch gekennzeichnet, dass** die Sender, insbesondere Lichtquelle (28; 31), zum Abstrahlen hochfrequenter optischer Signalpulse, insbesondere Lichtpulse, und die Empfänger (29; 32) zum Empfangen dieser Signalpulse, insbesondere Lichtpulse, eingerichtet sind.

11. Schleifleitungssystem (1; 34) mit einer Schleifleitung (6; 35) zur Versorgung mindestens eines an der Schleifleitung (6; 35) in deren Längsrichtung (L) verfahrbaren elektrischen Verbrauchers mit elektrischer Energie, mit mindestens einem in Längsrichtung (L) verlaufenden Leiterstrang (15) mit einem elektrisch leitenden Leiterprofil (10, 16) zur Kontaktierung mit einem Schleifkontakt (21, 22) des Verbrauchers, wobei längs der Schleifleitung (6; 35) eine in Längsrichtung (L) verlaufende erste optische Übertragungseinheit (27) angeordnet ist, und eine in Längsrichtung (L) gegenüber der Schleifleitung (6; 35) mit dem Verbraucher verfahrbare zweite optische Übertragungseinheit (30) vorgesehen ist **dadurch gekennzeichnet, dass** die Schleifleitung (6; 35) als längliches Hohlprofil (24) mit einem in Längsrichtung (L) verlaufenden Hohlraum (25) und einem in Längsrichtung (L) verlaufenden Längsschlitz (28) ausgebildet ist, wobei die erste optische Übertragungseinheit (27) in dem Hohlraum (25) angeordnet ist.

12. Schleifleitungssystem (1; 34) nach Anspruch 11, **dadurch gekennzeichnet, dass** die Schleifleitung (6; 35) nach einem der Ansprüche 1 bis 5 oder 9 bis 10 ausgebildet ist und/oder die zweite optische Übertragungseinheit (30) an einem Stromabnehmer (3) nach einem der Ansprüche 6 bis 10 des Verbrauchers angeordnet ist.

13. Schleifleitungssystem nach Anspruch 11 oder 12, **dadurch gekennzeichnet, dass** die optischen Sender (28) bzw. Empfänger (29) der ersten optischen Übertragungseinheit (27) und die optische Empfänger (32) bzw. Sender (31) der zweiten optischen Übertragungseinheit (30) aufeinander zugerichtet sind.

14. Verfahren zur berührungslosen Datenübertragung bei einem Schleifleitungssystem (1; 34) nach einem der Ansprüche 11 bis 13, **dadurch gekennzeichnet, dass** die optischen Sender (28) der ersten optischen Übertragungseinheit (27) ein optisches Datensignal in Form hochfrequenter optischer Signalpulse aussenden.

15. Verfahren nach Anspruch 14, **dadurch gekennzeichnet, dass** das von den optischen Sendern (28) der ersten optischen Übertragungseinheit (27) ausgesendet optische Datensignal von dem von den optischen Sendern (31, 31') der zweiten optischen Übertragungseinheit (27) ausgesendeten optischen Datensignal unterscheidbar ist, und/oder dass die optischen Sender (28) der ersten optischen Übertragungseinheit (27) alle das gleiche optische Datensignal aussenden.

16. Verfahren nach Anspruch 14 oder 15, **dadurch gekennzeichnet, dass** das Datensignal von einem ersten optischen Sender (28) der ersten optischen Übertragungseinheit (27) ausgesendet wird, dann von einem in Längsrichtung (L) beabstandet zu diesem angeordneten ersten optischen Empfänger (29') der ersten optischen Übertragungseinheit (27) empfangen wird, dann das empfangene optische Datensignal elektrisch oder optisch an einen in Längsrichtung (L) beabstandet vom ersten optischen Sender (28) angeordneten zweiten optischen Sender (28') der ersten optischen Übertragungseinheit (27) weitergeleitet wird, und dann von dem zweiten optischen Sender (28') das optische Datensignal ausgesendet wird.

17. Verfahren nach Anspruch 16, **dadurch gekennzeichnet, dass** das von dem ersten optischen Sender (28) der ersten optischen Übertragungseinheit (27) ausgesendete optische Datensignal von einem optischen Empfänger (32') der verfahrbaren zweiten optischen Übertragungseinheit (30) empfangen wird, und ein optischer Sender (31) der verfahrbaren zweiten optischen Übertragungseinheit (30) das optische Datensignal bevorzugt in Fahrtrichtung wieder aussendet.

18. Verfahren nach einem der Ansprüche 16 oder 17, **dadurch gekennzeichnet, dass** das Datensignal zwischen dem ersten optischen Empfänger (29') und dem zweiten optischen Sender (28') der ersten optischen Übertragungseinheit (27) und/oder zwischen dem optischen Empfänger (32') und dem optischen Sender (31) der verfahrbaren zweiten optischen Übertragungseinheit (30) verstärkt wird.

## Claims

1. Conductor line (6; 35) for supplying at least one electrical load which is movable on the conductor line (6; 35) in the longitudinal direction (L) thereof with electrical energy, having at least one conductor strand (15) running in longitudinal direction (L) with an electrically conductive conductor profile (10, 16) for making contact with a sliding contact (21, 22) of the load, wherein a first optical transmission unit (27) running in longitudinal direction (L) is arranged on the conductor line (6; 35) for contactless data transmission with a second optical transmission unit (30) which is movable with respect to the conductor line (6; 35), **characterised in that** the conductor line (6; 35) is designed as an elongated hollow profile (24) with a hollow space (25) running in longitudinal direction (L) and a longitudinal slot (28) running in longitudinal direction (L), wherein the first optical transmission unit (27) is arranged in the hollow space (25).

2. Conductor line (6; 35) according to claim 1, **characterised in that** the first optical transmission unit (27) has a plurality of optical transmitters (28) and/or receivers (29) in longitudinal direction (L) for data transmission with at least one optical receiver (32) or transmitter (31) of the second optical transmission unit (27).

3. Conductor line (6; 35) according to claim 2, **characterised in that** the optical transmitters (28) or receivers (29) of the first optical transmission unit (27) are aligned to emit light signals in longitudinal direction (L) or to receive them at least partly in longitudinal direction (L).

4. Conductor line (6; 35) according to one of the preceding claims, **characterised in that** at least some of the optical transmitters (28) or receivers (29) of the first optical transmission unit (27) are arranged spaced from one another at a predetermined maximum distance (A) in longitudinal direction (L).

5. Conductor line (6; 35) according to one of the preceding claims, **characterised in that** the first optical transmission unit (27) is arranged in a housing running along the conductor line (6; 35).

6. Current collector (3) for supplying at least one electrical load which is movable on a conductor line (6; 35) in the longitudinal direction (L) thereof with electrical energy, wherein the current collector (3) has at least one sliding contact (21, 22) for making contact with an electrically conductive conductor profile (10, 16) of a conductor strand (15) of the conductor line (6; 35), wherein a second optical transmission unit (30), which is movable with respect to the conductor line (6; 35) in longitudinal direction (L) for contactless data transmission with a first optical transmission unit (27) arranged on the conductor line (6; 35), is arranged on the current collector (3), wherein the conductor line (6; 35) is designed as an elongated hollow profile (24) with a hollow space (25) running in longitudinal direction (L) and a longitudinal slot (28) running in longitudinal direction (L), wherein the first optical transmission unit (27) is arranged in the hollow space (25), **characterised in that** the second optical transmission unit (30) is arranged on a support (33) which is movable with the load and engages through the longitudinal slot (25) into the hollow space (24), or **in that** the second optical transmission unit (30) is arranged on an upper end facing the first optical transmission unit (27) of a part of a current collector carriage (39) projecting through the longitudinal slot into the hollow space (24).

7. Current collector (3) according to claim 6, **characterised in that** the second optical transmission unit (30) has at least one optical transmitter (31) and/or receiver (32) for data transmission with at least one optical receiver (29) or transmitter (28) of the first optical transmission unit (27).

8. Current collector (3) according to claim 7, **characterised in that** the at least one optical transmitter (28) and/or receiver (29) of the second optical transmission unit (27) is aligned to emit light signals in longitudinal direction (L) or to receive them at least partly in longitudinal direction (L).

9. Conductor line (6; 35) according to one of claims 1 to 5 and/or current collector (3) according to claim 6 or 8, **characterised in that** the transmitters (28; 31) have a light source, in particular an infrared light source.

10. Conductor line (6; 35) and/or current collector (3) according to claim 9, **characterised in that** the transmitters, in particular light source (28; 31), are equipped to emit highfrequency optical signal pulses, in particular light pulses, and the receivers (29; 32) to receive these signal pulses, in particular light pulses.

11. Conductor line system (1; 34) with a conductor line (6; 35) for supplying at least one electrical load which is movable on the conductor line (6; 35) in the longitudinal direction (L) thereof with electrical energy, having at least one conductor strand (15) running in longitudinal direction (L) with an electrically conductive conductor profile (10, 16) for making contact with a sliding contact (21, 22) of the load, wherein a first optical transmission unit (27) running in longitudinal direction (L) is arranged along the conductor line (6; 35), and a second optical transmission unit (30) which is movable with the load in longitudinal direction (L) with respect to the conductor line (6; 35) is provided, **characterised in that** the conductor line (6; 35) is designed as an elongated hollow profile (24) with a hollow space (25) running in longitudinal direction (L) and a longitudinal slot (28) running in longitudinal direction (L), wherein the first optical transmission unit (27) is arranged in the hollow space (25)

12. Conductor line system (1; 34) according to claim 11, **characterised in that** the conductor line (6; 35) is designed according to one of claims 1 to 5 or 9 to 10 and/or the second optical transmission unit (30) is arranged on a current collector (3) according to one of claims 6 to 10 of the load.

13. Conductor line system according to claim 11 or 12, **characterised in that** the optical transmitters (28) or receivers (29) of the first optical transmission unit (27) and the optical receivers (32) or transmitters (31) of the second optical transmission unit (30) are directed towards one another.

14. Method for contactless data transmission in a conductor line system (1; 34) according to one of claims 11 to 13, **characterised in that** the optical transmitters (28) of the first optical transmission unit (27) emit an optical data signal in the form of highfrequency optical signal pulses.

15. Method according to claim 14, **characterised in that** the optical data signal emitted by the optical transmitters (28) of the first optical transmission unit (27) can be differentiated from the optical data signal emitted by the optical transmitters (31, 31') of the second optical transmission unit (27), and/or **in that** the optical transmitters (28) of the first optical transmission unit (27) all emit the same optical data signal.

16. Method according to claim 14 or 15, **characterised in that** the data signal is emitted by a first optical transmitter (28) of the first optical transmission unit (27), then is received by a first optical receiver (29') of the first optical transmission unit (27) arranged spaced from the first optical transmitter (28) in longitudinal direction (L), then the received optical data signal is forwarded electrically or optically to a second optical transmitter (28') of the first optical transmission unit (27) arranged spaced from the first optical transmitter (28) in longitudinal direction (L), and then the optical data signal is emitted by the second optical transmitter (28').

17. Method according to claim 16, **characterised in that** the optical data signal emitted by the first optical transmitter (28) of the first optical transmission unit (27) is received by an optical receiver (32') of the movable second optical transmission unit (30), and an optical transmitter (31) of the movable second optical transmission unit (30) emits the optical data signal again preferably in the direction of travel.

18. Method according to one of claims 16 or 17, **characterised in that** the data signal is amplified between the first optical receiver (29') and the second optical transmitter (28') of the first optical transmission unit (27) and/or between the optical receiver (32') and the optical transmitter (31) of the movable second optical transmission unit (30).

## Revendications

1. Ligne à contact glissant (6 ; 35) pour l'alimentation en énergie électrique d'au moins un consommateur électrique pouvant se déplacer sur la ligne à contact glissant (6 ; 35) dans la direction longitudinale (L) de celle-ci, avec au moins une ligne conductrice (15) s'étendant dans la direction longitudinale (L) avec un profilé conducteur (10, 16) électroconducteur pour la mise en contact avec un contact glissant (21, 22) du consommateur, dans laquelle une première unité de transmission optique (27) s'étendant dans la direction longitudinale (L) pour la transmission de données sans contact avec une deuxième unité de transmission optique (30) pouvant se déplacer par rapport à la ligne à contact glissant (6 ; 35) est disposée sur la ligne à contact glissant (6 ; 35), **caractérisée en ce que** la ligne à contact glissant (6 ; 35) est réalisée en tant que profilé creux allongé (24) avec une cavité (25) s'étendant dans la direction longitudinale (L) et une fente longitudinale (28) s'étendant dans la direction longitudinale (L), dans laquelle la première unité de transmission optique (27) est disposée dans la cavité (25).

2. Ligne à contact glissant (6 ; 35) selon la revendication 1, **caractérisée en ce que** la première unité de transmission optique (27) présente dans la direction longitudinale (L) une pluralité d'émetteurs (28) et/ou de récepteurs (29) optiques pour la transmission de données avec au moins un récepteur (32) ou émetteur (31) optique de la deuxième unité de transmission optique (27).

3. Ligne à contact glissant (6 ; 35) selon la revendication 2, **caractérisée en ce que** les émetteurs (28) ou récepteurs (29) optiques de la première unité de transmission optique (27) sont conçus pour l'émission de signaux de lumière dans la direction longitudinale (L) ou pour la réception de ceux-ci au moins en partie dans la direction longitudinale (L).

4. Ligne à contact glissant (6 ; 35) selon l'une quelconque des revendications précédentes, **caractérisée en ce qu'**au moins certains des émetteurs (28) ou récepteurs (29) optiques de la première unité de transmission optique (27) sont disposés à distance les uns des autres à une distance maximale prédéfinie (A) dans la direction longitudinale (L).

5. Ligne à contact glissant (6 ; 35) selon l'une quelconque des revendications précédentes, **caractérisée en ce que** la première unité de transmission optique (27) est disposée dans un boîtier s'étendant le long de la ligne à contact glissant (6 ; 35).

6. Collecteur de courant (3) pour l'alimentation en énergie électrique d'au moins un consommateur électrique pouvant se déplacer sur une ligne à contact glissant (6 ; 35) dans la direction longitudinale (L) de celle-ci, dans lequel le collecteur de courant (3) présente au moins un contact glissant (21, 22) pour la mise en contact avec un profilé conducteur (10, 16) électroconducteur d'une ligne conductrice (15) de la ligne à contact glissant (6 ; 35), dans lequel une deuxième unité de transmission optique (30) pouvant se déplacer par rapport à la ligne à contact glissant (6 ; 35) dans la direction longitudinale (L) pour la transmission de données sans contact avec une première unité de transmission optique (27) disposée sur la ligne à contact glissant (6 ; 35) est disposée sur le collecteur de courant (3), dans lequel la ligne à contact glissant (6 ; 35) est réalisée en tant que profilé creux allongé (24) avec une cavité (25) s'étendant dans la direction longitudinale (L) et une fente longitudinale (28) s'étendant dans la direction longitudinale (L), dans lequel la première unité de transmission optique (27) est disposée dans la cavité (25), **caractérisé en ce que** la deuxième unité de transmission optique (30) est disposée sur un support (33) pouvant se déplacer avec le consommateur, qui s'insère dans la cavité (24) à travers la fente longitudinale (25), ou que la deuxième unité de transmission optique (30) est disposée sur une extrémité supérieure tournée vers la première unité de transmission optique (27) d'une partie d'un chariot de collecteur de courant (39) faisant saillie dans la cavité (24) à travers la fente longitudinale.

7. Collecteur de courant (3) selon la revendication 6, **caractérisé en ce que** la deuxième unité de transmission optique (30) présente au moins un émetteur (31) et/ou récepteur (32) optique pour la transmission de données avec au moins un récepteur (29) ou émetteur (28) optique de la première unité de transmission optique (27).

8. Collecteur de courant (3) selon la revendication 7, **caractérisé en ce que** l'au moins un émetteur (28) et/ou récepteur (29) optique de la deuxième unité de transmission optique (27) est conçu pour l'émission de signaux de lumière dans la direction longitudinale (L) ou pour la réception de ceux-ci au moins en partie dans la direction longitudinale (L).

9. Ligne à contact glissant (6 ; 35) selon l'une quelconque des revendications 1 à 5 et/ou collecteur de courant (3) selon la revendication 6 ou 8, **caractérisée en ce que** les émetteurs (28 ; 31) présentent une source de lumière, en particulier une source de lumière infrarouge.

10. Ligne à contact glissant (6 ; 35) et/ou collecteur de courant (3) selon la revendication 9, caractérisé(e) en ce que les émetteurs, en particulier la source de lumière (28 ; 31), sont configurés pour l'émission d'impulsions de signal optique à haute fréquence, en particulier d'impulsions lumineuses, et les récepteurs (29 ; 32) pour la réception de ces impulsions de signal, en particulier impulsions lumineuses.

11. Système de ligne à contact glissant (1 ; 34) avec une ligne à contact glissant (6 ; 35) pour l'alimentation en énergie électrique d'au moins un consommateur électrique pouvant se déplacer sur la ligne à contact glissant (6 ; 35) dans la direction longitudinale (L) de celle-ci, avec au moins une ligne conductrice (15) s'étendant dans la direction longitudinale (L) avec un profilé conducteur (10, 16) électroconducteur pour la mise en contact avec un contact glissant (21, 22) du consommateur, dans lequel une première unité de transmission optique (27) s'étendant dans la direction longitudinale (L) est disposée le long de la ligne à contact glissant (6 ; 35), et une deuxième unité de transmission optique (30) pouvant se déplacer avec le consommateur dans la direction longitudinale (L) par rapport à la ligne à contact glissant (6 ; 35) est prévue, **caractérisé en ce que** la ligne à contact glissant (6 ; 35) est réalisée en tant que profilé creux allongé (24) avec une cavité (25) s'étendant dans la direction longitudinale (L) et une fente longitudinale (28) s'étendant dans la direction longitudinale (L), dans lequel la première unité de transmission optique (27) est disposée dans la cavité (25).

12. Système de ligne à contact glissant (1 ; 34) selon la revendication 11, **caractérisé en ce que** la ligne à contact glissant (6 ; 35) est réalisée selon l'une quelconque des revendications 1 à 5 ou 9 à 10 et/ou la deuxième unité de transmission optique (30) est disposée sur un collecteur de courant (3) selon l'une quelconque des revendications 6 à 10 du consommateur.

13. Système de ligne à contact glissant selon la revendication 11 ou 12, **caractérisé en ce que** les émetteurs (28) ou récepteurs (29) optiques de la première unité de transmission optique (27) et les récepteurs (32) ou émetteurs (31) optiques de la deuxième unité de transmission optique (30) sont dirigés les uns vers les autres.

14. Procédé pour la transmission de données sans contact pour un système de ligne à contact glissant (1 ; 34) selon l'une quelconque des revendications 11 à 13, **caractérisé en ce que** les émetteurs (28) optiques de la première unité de transmission optique (27) envoient un signal de données optique sous forme d'impulsions de signal optique à haute fréquence.

15. Procédé selon la revendication 14, **caractérisé en ce que** le signal de données optique envoyé par les émetteurs (28) optiques de la première unité de transmission optique (27) peut se différencier du signal de données optique envoyé par les émetteurs (31, 31') optiques de la deuxième unité de transmission optique (27), et/ou que les émetteurs (28) optiques de la première unité de transmission optique (27) envoient tous le même signal de données optique.

16. Procédé selon la revendication 14 ou 15, **caractérisé en ce que** le signal de données est envoyé par un premier émetteur (28) optique de la première unité de transmission optique (27), puis est reçu par un premier récepteur (29') optique de la première unité de transmission optique (27) disposé à distance de celui-ci dans la direction longitudinale (L), puis le signal de données optique reçu est transféré de manière électrique ou optique à un deuxième émetteur (28') optique de la première unité de transmission optique (27) disposé à distance du premier émetteur (28) optique dans la direction longitudinale (L), et ensuite le signal de données optique est envoyé par le deuxième émetteur (28') optique.

17. Procédé selon la revendication 16, **caractérisé en ce que** le signal de données optique envoyé par le premier émetteur (28) optique de la première unité de transmission optique (27) est reçu par un récepteur (32') optique de la deuxième unité de transmission optique (30) pouvant se déplacer, et un émetteur (31) optique de la deuxième unité de transmission optique (30) pouvant se déplacer renvoie le signal de données optique de préférence dans le sens de marche.

18. Procédé selon l'une quelconque des revendications 16 ou 17, **caractérisé en ce que** le signal de données entre le premier récepteur (29') optique et le deuxième émetteur (28') optique de la première unité de transmission optique (27) et/ou entre le récepteur (32') optique et l'émetteur (31) optique de la deuxième unité de transmission optique (30) pouvant se déplacer est amplifié.
